# EUROPÄISCHE PATENTANMELDUNG

(11) **EP 1 069 714 A2**
(43) Veröffentlichungstag der Anmeldung: **17.01.2001**
(21) Anmeldenummer: 00113372.7
(22) Anmeldetag: 23.06.2000
(51) Int. Cl.: H04H 1/00, G01C 21/00

(54) **Verfahren und Vorrichtung für den Empfang von über einen Funknetz übertragenen digitalen Signalen mit Auswertung der Ortskoordinaten worauf die übertragenen Signalen Bezug nehmen**

(30) Priorität: 03.07.1999 DE 19930780
(71) Anmelder: ROBERT BOSCH GMBH, 70442 Stuttgart (DE)
(72) Erfinder: Petersen, Detlev, 31139 Hildesheim (DE); Rosenbrock, Ralf, 30880 Laatzen (DE); Hallier, Jürgen, 31188 Luttrum (DE); Wollrabe, Patrick, 31139 Hildesheim (DE); Lawiszus, Bodo, 31139 Hildesheim (DE); Kalkbrenner, Hans-Joachim, 38667 Bad Harzburg (DE); Gatzke, Torsten, 31141 Hildesheim (DE)

(57) **Zusammenfassung**

Es wird ein Verfahren zum Empfang von digitalen Signalen über ein Funknetz bzw. eine Empfangsvorrichtung für über Funkkanäle übertragene digitale Signale vorgeschlagen, die dazu dienen, die über ein Funknetz empfangenen Informationen standortabhängig darzustellen. Verfahren und Empfangsvorrichtung gestatten die Differenzbildung zwischen den Ortskoordinaten der übertragenen Information und dem Standort der Empfangsvorrichtung. Liegt die Differenz unterhalb einer vorgegebenen Schwelle wird die Information optisch und/oder akustisch dargestellt.

## Beschreibung

### Stand der Technik

Die Erfindung geht von einem Verfahren zum Empfang von digitalen Signalen über ein Funknetz bzw. einer Empfangsvorrichtung für über Funkkanäle übertragene digitale Signale nach der Gattung der unabhängigen Patentansprüche aus.

Bei den bekannten Rundfunkübertragungsverfahren werden bereits Werbungs- und Informationseinblendungen vorgenommen, wobei jeder Empfänger im Sendegebiet diese Informationen erhält. Es liegt also ein Informationsfluß vor, der von allen Konsumenten der Rundfunkübertragung aufgenommen werden muß. Insbesondere digitale Rundfunkverfahren wie DAB (Digital Audio Broadcasting) oder DVB (Digital Video Broadcasting) bieten attraktive Möglichkeiten, neben dem eigentlichen Programm zusätzliche Informationen zu übertragen. Hierbei wird in Thomas Lauterbach (Herausgeber): 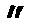 Digital Audio Broadcasting", Franzis Verlag, 1996, auf Seite 134 auf die Möglichkeiten des Mulitmediaobject-Transfer-Protokolls (MOT) hingewiesen. Das MOT-Protokoll erlaubt die freie Zuordnung von Dateiattributen, die für die spätere Verarbeitung der Information verwendet werden. Diese Dateiattribute betreffen insbesondere die spätere Darstellung der Information.

### Vorteile der Erfindung

Das erfindungsgemäße Verfahren zum Empfang von digitalen Signalen über ein Funknetz bzw. die erfindungsgemäße Empfangsvorrichtung für über Funkkanäle übertragene digitale Signale mit den Merkmalen der unabhängigen Patentansprüche hat demgegenüber den Vorteil, daß Informationen, wie zum Beispiel Werbung, nur von solchen Empfangsvorrichtungen dargestellt werden, die sich in einem geographisch eng definierten Gebiet befinden, wodurch eine geeignete Zielgruppe selektiert wird.

Als weiterer Vorteil ist anzusehen, daß die Größe des Geltungsbereichs der Information durch eine beliebige Vorgabe einer Schwelle frei wählbar ist. Damit wird die Übertragung von zum Beispiel Werbung bei digitalen Übertragungsverfahren als Information effektiv auf einen potentiellen Interessentenkreis begrenzt. Es wird darüber hinaus die Akzeptanz dieser Information erhöht, weil nur potentiell interessierte Personen diese Information empfangen werden.

Durch die in den abhängigen Ansprüchen aufgeführten Maßnahmen sind vorteilhafte Weiterbildungen und Verbesserungen des bzw. der in den unabhängigen Ansprüchen angegebenen Verfahrens bzw. Empfangsvorrichtung möglich.

Besonders vorteilhaft ist, daß beim Empfang mehrerer Information für einen Ort, in dessen Bereich sich der Empfänger befindet, zunächst nur eine Information dargestellt wird, und die übrigen Informationen in einer Warteschlange abgelegt werden. Dies hat den Vorteil, daß keine Informationen verlorengehen.

In einer weiteren Ausbildung der Erfindung werden die Informationen in der Warteschlange nach der Darstellung der aktuellen Information dahingehend überprüft, ob sie noch für den Bereich, in dem sich der Empfänger befindet, relevant sind und dementsprechend dargestellt. Dadurch wird erreicht, daß nur für den Standort der Empfangsvorrichtung gültige Informationen dargestellt werden, auch wenn sie abgespeichert waren.

Weiterhin ist von Vorteil, daß für eine einfachere Signalverarbeitung im Empfänger die digitalen Signale in Rahmen aufgeteilt sind, die die Ortskoordinaten der Informationen und die darzustellenden Informationen selbst aufweisen.

Die Rahmen bestehen aus Segmenten, wobei in einem dieser Segmente ein Informationsrahmen enthalten ist. Der Informationsrahmen weist in einem seiner Datensegmente Datenfelder auf, die die Art der Information, die Informationseigenschaften, die Ortskoordinaten der Information und die Anzeigeeigenschaften beinhalten. In einem weiteren Datensegment ist die Information selbst enthalten. Dieses Datensegment besteht aus einem Segmentkopf einem Nutzdatenfeld und einem Segmentende.

In einer weiteren Ausgestaltung der Erfindung ist vorgesehen, daß Informationen für mehrere Bereiche gelten. Eine Information wird daher mit verschiedenen Ortskoordinaten gesendet, um dadurch einen größeren Bereich abzudecken, als es nur mit einem Satz von Ortskoordinaten möglich wäre.

In einfacher Weise wird eine größere Flexibilität für den Empfänger und für den Verfasser der gesendeten Information dadurch erreicht, daß der Wert für die Schwelle, die den geographischen Geltungsbereich der Information festlegt, mit der Information selbst übertragen wird.

Weiterhin ist es von Vorteil, daß auch an der Empfangsvorrichtung selbst die Schwelle verändert werden kann, damit der geographische Geltungsbereich für die empfangene Information angepaßt wird.

Die Empfangsvorrichtung wird dadurch erweitert, daß die empfangene Information auf einem nicht flüchtigen Speicher abgelegt wird. Dadurch wird erreicht, daß wichtige Informationen später verwaltet werden können.

In einer weiteren Ausgestaltung der Erfindung ist vorgesehen, daß die Empfangsvorrichtung durch Spracheingabe bedienbar ist. Damit wird es ermöglicht, daß die Empfangsvorrichtung auch von einem Fahrer einfach bedient werden kann.

Die Empfangsvorrichtung wird in einfacher Weise dahingehend erweitert, daß ein Bedienelement zum Ein-und Ausschalten der Informationsdarstellung angebracht wird. Die Folge ist, daß der Nutzer selbst wählen kann, ob er die Informationsdarstellung wünscht oder nicht.

Die Ortbestimmung der Empfangsvorrichtung wird in vorteilhafterweise entweder mit einem Global-Positioning-Empfänger, einem Navigationssystem oder einer Vorrichtung, die mittels Transmission-Identification-Information-Signalen, die von den Sendern kommen, den Ort der Empfangsvorrichtung bestimmt, vorgenommen.

### Zeichnung

Ausführungsbeispiele der Erfindung sind in den Zeichnungen dargestellt und in der nachfolgenden Beschreibung näher erläutert. Es zeigen
Figur 1 ein Blockdiagramm der Empfangsvorrichtung zum Empfang von zum Beispiel DAB-Signalen,
Figur 2 den DAB-Rahmen und den MOT-Rahmen,
Figur 3 das Datensegment des MOT-Rahmens für die Steuer- und Ortsinformationen,
Figur 4 das Datensegment des MOT-Rahmens für die Informationen selbst,
Figur 5 ein Ablaufdiagramm für die Verarbeitung einer Information im DAB-Empfänger und
Figur 6 ein Ablaufdiagramm über die Pufferung von Informationen.

### Beschreibung der Ausführungsbeispiele

Für den Verfasser von zum Beispiel Werbung ist es wichtig, daß seine Information den interessierten Personenkreis erreicht. Bei beispielsweise DAB sind umfangreiche Möglichkeiten geboten, um neben dem Audioprogramm weitere Informationen zu übertragen. Wichtig ist nun, daß die Zielgruppe der Informationen erreicht und damit ausgewählt wird.

DAB ist ein digitales Übertragungsverfahren für Hörfunk und Multimedia, wobei die einzelnen Programme auf verschiedenen Frequenzen übertragen werden. Es zeichnet sich dadurch aus, daß neben den Programmen weitere Audio- und/oder Dateninformationen übertragen werden können. Die Datenstruktur dieser Informationen ist durch das Multimediaobject-Transfer-Protokoll gegeben. Hierbei können die Daten in beliebige Größen geordnet und mit beliebigen Inhalt gefüllt werden.

Als Ortungsvorrichtung ist ein Global-Positioning-System-Empfänger heute sehr gebräuchlich. Er berechnet seinen Standort aufgrund von Signalen, die er von Satelliten erhält.

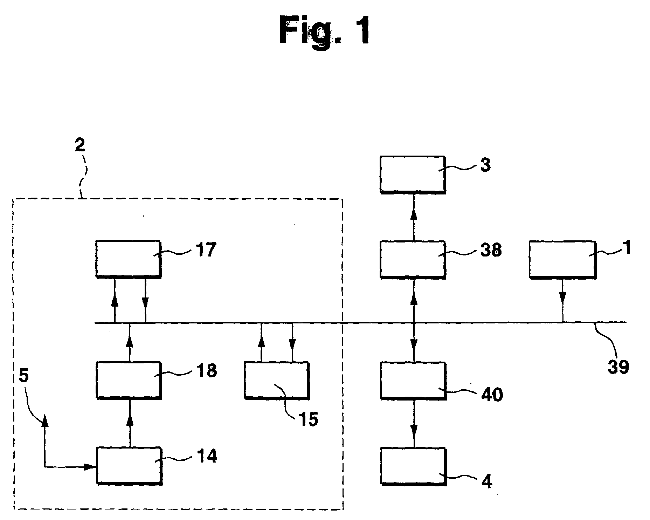

In der Figur 1 ist schematisch die Empfangsvorrichtung dargestellt. Ein GPS-Empfänger 1 ist über einen Datenausgang an den Datenbus 39 angeschlossen. Eine Antenne 5 ist mit einem Empfänger 14 verbunden. Der Ausgang des Empfängers 14 ist an einen Eingang eines Analog-Digital-Wandlers 18 angeschlossen. Der Digitalausgang des Analog-Digital-Wandlers 18 ist an den Datenbus 39 angeschlossen. Ein Prozessor 17 ist mit Daten- Ein-und Ausgängen mit dem Datenbus 39 verbunden. Der Speicher 15 ist mit seinen Daten-Ein- und Ausgängen an den Datenbus 39 angeschlossen. Signalverarbeitungseinrichtungen 38 und 40 sind jeweils über ihre Eingänge mit den Datenbus 39 verbunden. Der Ausgang der Signalverarbeitungseinrichtung 38 ist über eine Leitung mit einem Audioverstärker 3 verbunden. Die Signalverarbeitungseinrichtung 40 ist über ihren Ausgang an einen Monitor 4 angeschlossen. Die Antenne 5 der Empfänger 14, der Analog-Digital-Wandler 18, der Prozessor 17 und der Speicher 15 sind Elemente des DAB-Empfängers 2.

Der GPS-Empfänger 1 ist in nächster Umgebung zum DAB-Empfänger 2 angeordnet, so daß der Standort, den der GPS-Empfänger 1 berechnet, auch für den DAB-Empfänger 2 gilt.

Als Alternative zum GPS-Empfänger 1 als Ortungseinrichtung können TII- (Transmitter Identification Information) Signale oder Navigationssysteme eingesetzt werden. Die TII-Signale, die von DAB-Sendern ausgestrahlt werden, weisen an der Empfangsvorrichtung eine Laufzeitdifferenz auf, die von der Empfangsvorrichtung in eine Entfernung zu den DAB-Sendern umgerechnet wird. Sind darüber hinaus die Standorte der DAB-Sender bekannt, kann der Ort der Empfangsvorrichtung bestimmt werden.

Der GPS-Empfänger 1 liefert über seinen Datenausgang die Standortinformation in Form eines 64 Bit langen Datums, wobei je 32 Bit dem Längengrad und dem Breitengrad zugeordnet werden, dauernd an den Prozessor 15. Anstatt daß der Prozessor 15 permanent vom GPS-Empfänger 1 die Standortinformation erhält, bietet sich die Lösung an, daß der Prozessor 15 über einen seiner Datenausgänge den GPS-Empfänger auffordert, den Prozessor 15 die aktuellen Standortinformationen zu ermitteln. Ein Vorteil dieser Lösung ist die Reduktion der Datenmenge, die pro Zeiteinheit über den Datenbus übertragen wird, während die im oben beschriebenen Ausführungsbeispiel dargestellte Lösung zu einem geringeren Aufwand führt.

Über die Antenne 5 werden die DAB-Signale empfangen und gelangen an den Eingang des Empfängers 14 des DAB-Empfängers 2. Der Empfänger 14 verstärkt die empfangenen DAB-Signale und setzt sie in eine niedrigere Zwischenfrequenz um. Über den Ausgang des Empfängers 14 für die Zwischenfrequenz gelangt das umgesetzte und verstärkte DAB-Zeitsignal über die Datenleitung in den Analogeingang eines Analog-Digital-Wandlers 18 des DAB-Empfängers 2. Der Analog-Digital-Wandler 18 überführt das DAB-Signal wieder in ein digitales Signal.

Das digitale Signal wird über den Digitalausgang des Analog-Digital-Wandlers 18 und den Datenbus 39 an den Prozessor 15 über einen seiner Dateneingänge übermittelt. Die digitalen Signale werden vom Prozessor 15 über den Datenbus 39 an den flüchtigen Speicher 17 übermittelt. Der flüchtige Speicher 17 ist als FIFO- (First-In-First-Out) Speicher ausgelegt. Das heißt, der zuletzt abgespeicherte Eintrag wird durch einen neuen Eintrag überschrieben, wenn die Speicherkapazität erschöpft ist. Es wird jedoch der älteste Eintrag als erster wieder entnommen.

Als Variante kann ein LIFO- (Last-In First-Out) Speicher verwendet werden. Auch hier wird der zuletzt abgespeicherte Eintrag durch einen neuen Eintrag überschrieben, wenn die Speicherkapazität erschöpft ist, aber es wird der zuletzt abgespeicherte Eintrag als erster wieder entnommen. Dieser flüchtige Speicher 17 übernimmt die Funktion einer Warteschlange für gepufferte Daten. Es kann ein nichtflüchtiger Speicher ergänzt werden. Auf ihm können empfange Informationen abgespeichert und verwaltet werden zum Beispiel das Darstellen, Löschen oder Senden von Informationen an angeschlossene Peripheriegeräte.

Der Prozessor 15 sendet über seine Datenausgänge über den Datenbus 39 digitale Signale an die Signalverarbeitungseinrichtung 38 und 40. Die Signalverarbeitungseinrichtung 38 wandelt die empfangenen digitalen Signale in Audio-Signale um, die dann vom Audioverstärker 3 verarbeitet werden. Die Signalverarbeitungseinrichtung 40 wandelt die digitalen Signale in ein Monitorsignal um, das der Monitor 4 darstellt. Als Alternative zum Monitor 4 kann ein Flüssigkristall-Bildschirm mit entsprechender Ansteuerelektronik verwendet werden.

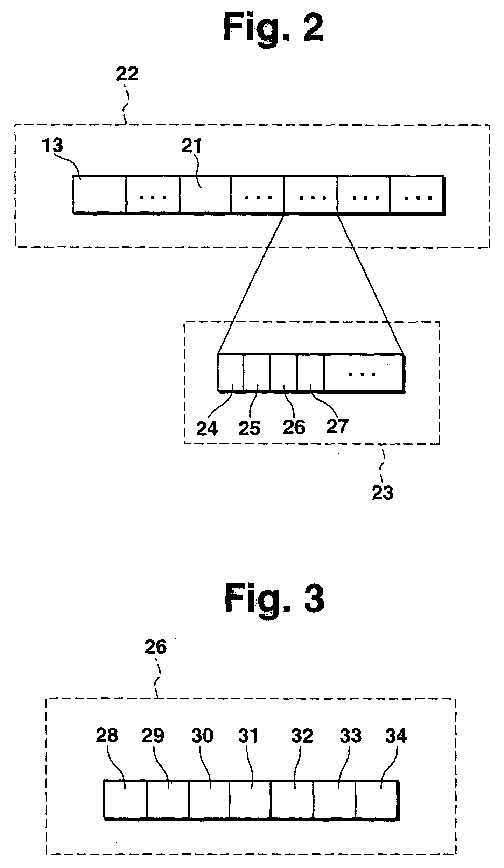

Die digitalen DAß-Signale liegen als Rahmen vor. Ein DAß-Rahmen 22 ist vereinfacht in Figur 2 dargestellt. Segment 19 wird für die Synchronisation verwendet, während mit Segment 21 die Nutzdatensegmente beginnen. In einem dieser Nutzdatensegmente ist ein MOT-Rahmen 23 abgelegt. Dieser MOT-Rahmen 23 weist zu Beginn einen Rahmenkopf und eine Rahmenkopferweiterung 25 auf. Bei dem MOT-Rahmen 23 dient der Rahmenkopf 24 und die Rahmenkopf-Erweiterung 25 für den Prozessor 15 zum Erkennen des MOT-Rahmenbeginns und darüber hinaus wie die nachfolgenden Dateien aufgeteilt sind und welche Größe sie haben.

Figur 3 stellt die Struktur des spezifischen Datenfeldes 26 vor, das sich in dem MOT-Rahmen 23 befindet (vergleiche Figur 2). Zu Anfang dieses Datenfeldes 26 gibt ein Segment Auskunft über die Art der Information 28. Dann folgt ein Segment das Informationseigenschaften 29 enthält, dann kommen die Ortskoordinaten 30, der Anzeigebeginn 31 und das Anzeigenende 32. Die Monitorinformationen 33 und schließlich Informationen über die Darstellungsform 34. Zum Beispiel wo auf dem Monitor die Information dargestellt werden soll, welche Größe die Buchstaben haben, welche Farbe sie haben oder welche Effekte, wie zum Beispiel blinkender Text, verwendet werden sollen.

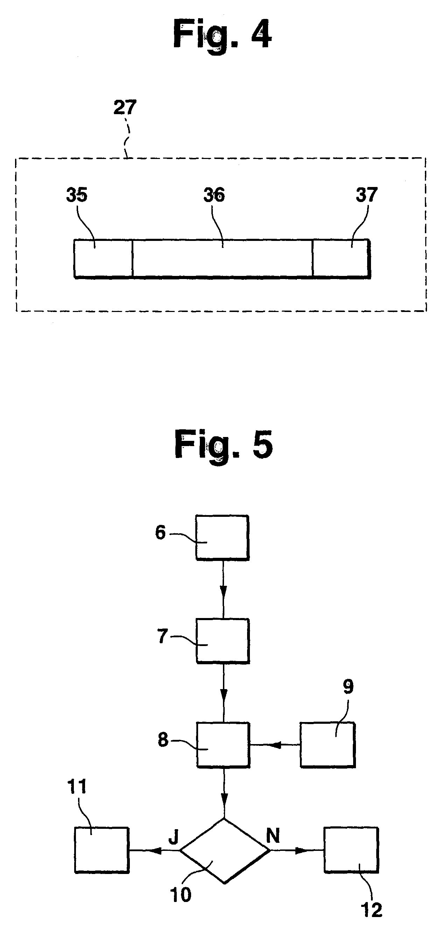

In Figur 4 liegt die Struktur des Nutzdatenfeldes 27 vor. Sie beginnt einem Segmentkopf 35, dann folgen die Nutzdaten 36 und schließlich das Segmentende 37. Der Segmentkopf 35 dient zur Synchronisation. In den Nutzdaten 36 sind die eigentlichen Informationen abgelegt die dargestellt werden sollen und das Segmentende 37 hat die Aufgabe der Fehlerkorrektur.

Das Ablaufdiagramm in Figur 5 illustriert die einzelnen Verfahrensschritte, die im Prozessor 15 während der Informationsverarbeitung abgearbeitet werden. Dieses Ablaufdiagramm wird nur durchlaufen, wenn der Prozessor 15 erkennt, daß in einem MOT-Rahmen 23 überhaupt eine darzustellende Information vorliegt. Dies erfährt der Prozessor 15 durch die Analyse der Rahmenkopferweiterung 25, die darüber Auskunft gibt, ob Dateien vorliegen und wie groß sie sind.

Der Prozessor 15 entnimmt aus dem DAB-Rahmen 22 den MOT-Rahmen 23 als Informationsrahmen im Verfahrensschritt 6, falls in dem MOT-Rahmen 23 eine Information zur Darstellung vorliegt. Im Verfahrensschritt 7 wird der MOT-Rahmen 23 auf seine Ortskoordinaten 30 hin untersucht. Dabei werden die Ortskoordinaten 30 in einem Speicherplatz als Daten abgelegt. In Verfahrensschritt 9 wird vom GPS-Empfänger 1 der Standort der Empfangsvorrichtung als Datum an den Prozessor 15 übergeben. In Verfahrensschritt 8 wird die Differenz zwischen den Ortskoordinaten 30 der Information und dem Standort der Empfangsvorrichtung gebildet. In Verfahrensschritt 10 wird die berechnete Differenz mit einer vorgegebenen Schwelle von fünfhundert Metern verglichen. Es wird demnach ein Radius von fünfhundert Metern um die Ortskoordinaten 30 gezogen und überprüft, ob sich der Standort der Empfangsvorrichtung innerhalb dieses Kreises befindet. Ist die Differenz kleiner als fünfhundert Metern, wird die Information in Verfahrensschritt 11 mittels des Audioverstärkers 3 und/oder des Monitors 4 dargestellt. Im anderen Fall wird die Information in Verfahrensschritt 12 verworfen und gelöscht.

Die Darstellung erfolgt gemäß den Angaben, die im Datenfeld 26 des MOT-Rahmens 23 abgelegt sind. Der Prozessor 15 entnimmt diese Angaben aus dem Datenfeld 26 und führt die entsprechende Aktion aus. Das heißt im Falle der akustischen Darstellung sendet der Prozessor 15 die Audiodaten an die Signalverarbeitungseinrichtung 38 oder im Falle der optischen Darstellung zu der Signalverarbeitungseinrichtung 40.

Die fünfhundert Meter als Wert für die Schwelle und damit für den Radius des Kreises um die empfangenen Ortskoordinaten sind in diesem Ausführungsbeispiel ein fester Wert, der im Prozessor 15 als Konstante abgelegt ist. In Figur 6 sind die Verfahrensschritte in einem Ablaufdiagramm gezeigt, das durchlaufen wird, falls Informationen im Prozessor eintreffen, während eine andere Information noch dargestellt wird.

In Verfahrensschritt 41 wird die neu empfangene Information in ihrem MOT-Rahmen von dem Prozessor 15 erkannt. In Verfahrensschritt 42 wird überprüft, ob im Moment eine andere Information dargestellt wird. Ist dies nicht der Fall, wird in Verfahrensschritt 43 das Ablaufdiagramm, das in Figur 5 gezeigt ist, für die neu empfangene Information durchlaufen. Wird im Moment eine Information dargestellt, gelangt in Verfahrensschritt 44 die soeben empfangene Information in den FIFO-Speicher 17 (Figur 1). In Verfahrensschritt 45 wird überprüft, ob erneut eine neue Information in Verfahrensschritt 41 anliegt. Ist dies nicht der Fall, durchläuft die erste Information im FIFO-Speicher 17 erneut Verfahrensschritt 42. Liegt eine neue Information an, verbleiben die Informationen im FIFO-Speicher 17. Andernfalls durchläuft die erste Information aus dem FIFO-Speicher das Ablaufdiagramm aus Figur 5. Der Vorteil dieser Lösung ist, daß die Informationen, die das Ablaufdiagramm in Figur 5 durchlaufen, sofort dargestellt werden, falls sie für den Standortbereich der Empfangsvorrichtung gültig sind.

Dieses Ablaufdiagramm kann alternativ auch nach Verfahrensschritt 10 in Figur 5 eingefügt werden. Der Vorteil dieser Lösung ist, daß nur für den aktuellen Standortbereich der Empfangsvorrichtung gültige Informationen in FIFO-Speicher 17 gelangen.-

Ein Bedienelement an der Empfangsvorrichtung dient zum Ein- und Ausschalten der akustischen und optischen Informationsdarstellung. Es werden jedoch weiterhin die DAB-Signale, wie oben beschrieben, bearbeitet, auch wenn die Anzeige durch das Bedienelement ausgeschaltet wurde.

Eine Erweiterung der erfindungsgemäßen Empfangseinrichtung ist durch die Bedienung durch Spracheingabe gegeben. Damit wird die einfache Benutzung durch einen Fahrer möglich.

Da einige Informationen für ein größeres Gebiet gelten sollen, können solche Informationen mit mehreren Ortskoordinaten übertragen werden. Das heißt, das Gebiet, für das die Information Gültigkeit hat, wird in Zellen aufgeteilt, und es werden Ortskoordinaten für jede dieser Zellen mit der jeweiligen Information übertragen. Dadurch wird die Information in all diesen Zellen als gültig erkannt und dargestellt.

Der Wert für die Schwelle kann alternativ zur festen Einstellung im Prozessor 15 mit einer Information zusätzlich gesendet werden, so daß eine Bestimmung des Geltungsbereichs der Information durch den Erzeuger der Information vorgenommen wird. Dadurch kann festgelegt werden, wie groß der Geltungsbereich einer Information ist.

Eine einfache Erweiterung ist dadurch gegeben, daß am DAB-Empfänger 2 eine Einflußnahme vorgesehen ist um die Schwelle zu verändern so daß der Gültigkeitsbereich an dem DAB-Empfänger selbst eingestellt werden kann. Damit kann der Konsument der Rundfunkübertragung bestimmen, für welchen Geltungsbereich er Informationen dargestellt haben möchte. Dies kann durch numerische Tasten oder durch Pfeiltasten ermöglicht werden, wobei die Pfeiltasten dazu dienen, daß die Schwelle für den Geltungsbereich der Information um einen festen Betrag von zum Beispiel einhundert Metern schrittweise erhöht oder gesenkt wird.

## Patentansprüche

1. Verfahren zum Empfang von digitalen Signalen über ein Funknetz, wobei die digitalen Signale Ortskoordinaten und damit verbundene Information beinhalten, wobei die durch einen Empfänger empfangenen Informationen akustisch und/oder optisch dargestellt werden, dadurch gekennzeichnet, daß im Empfänger (2) die Ortskoordinaten der jeweiligen Information ausgewertet werden, daß der Standort (2) durch eine Ortungsvorrichtung (1) ermittelt wird, daß eine Differenz zwischen dem Standort des Empfängers (2) und den empfangenen Ortskoordinaten gebildet wird und daß, wenn die Differenz zwischen den Ortskoordinaten und dem Standort des Empfängers (2) eine vorgegeben Schwelle unterschreitet, die zugehörige Information ausgegeben wird.

2. Verfahren nach Anspruch 1, dadurch gekennzeichnet, daß bei dem Empfang mehrerer Informationen für einen Ort, in dessen Bereich sich die Empfangsvorrichtung befindet, zunächst eine Information dargestellt wird, während die übrigen Informationen abgespeichert werden.

3. Verfahren nach Anspruch 2, dadurch gekennzeichnet, daß abgespeicherte Informationen nach Darstellen der aktuellen Informationen dahingehend überprüft werden, ob die Differenz zwischen den Ortskoordinaten der Information und dem Standort des Empfängers (2) noch unter der vorgegebenen Schwelle liegt und daß die folgende Information akustisch und/oder optisch dargestellt wird.

4. Verfahren nach Anspruch 3, dadurch gekennzeichnet, daß Ortskoordinaten in einem Rahmen empfangen werden, wobei der Rahmen in einzelne Segmente aufgeteilt wird, daß in einem der Segmente (21) ein Informationsrahtmen (23) enthalten ist, daß der Informationsrahmen (23) in einem Datensegment (26) Datenfelder aufweist, die die Art der Information (28) die Informationseigenschaften (29), die Ortskoordinaten der Information (30) und Anzeigeeigenschaften (31 - 34) beinhalten, und daß der Informationsrahmen in einem Datensegment (27) die Information enthält.

5. Verfahren nach Anspruch 4, dadurch gekennzeichnet, daß das Datensegment (27) aus einem Segmentkopf (35) einem Nutzdatenfeld (36) und einem Segmentende (37) besteht.

6. Verfahren nach Anspruch 5, dadurch gekennzeichnet, daß die gleiche Information mit mehreren Ortskoordinaten übertragen wird.

7. Verfahren nach Anspruch 5, dadurch gekennzeichnet, daß der Wert für die Schwelle mit der jeweiligen Information übertragen wird.

8. Verfahren nach Anspruch 5, dadurch gekennzeichnet, daß die Schwelle an der Empfangsvorrichtung eingestellt wird.

9. Empfangsvorrichtung für über Funkkanäle übertragene digitale Signale, wobei die digitalen Signale Ortskoordinaten und damit verbundene Informationen beinhalten mit einem Empfänger (2), der mit einer Ortungsvorrichtung (1) verbunden ist mit Mitteln zur akustischen und/oder optischen Darstellung (3, 4) von Informationen, dadurch gekennzeichnet, daß der Empfänger (2) die Ortskoordinaten der Informationen auswertet, daß der Empfänger (2) den Standort des Empfängers (2) von der Ortungseinrichtung (1) erhält, daß der Empfänger (2) eine Differenz zwischen den Ortskoordinaten der Information und dem Standort des Empfängers (2) bildet und daß der Empfänger (2) die Information zur akustischen und/oder optischen Darstellung (3, 4) übergibt, wenn die Differenz unter einer vorgegebenen Schwelle liegt.

10. Empfangsvorrichtung nach Anspruch 9, dadurch gekennzeichnet, daß der Empfänger (2) die Informationen in einem nichtflüchtigen Speicher ablegt.

11. Empfangsvorrichtung nach Anspruch 10, dadurch gekennzeichnet, daß die Empfangsvorrichtung durch Spracheingabe bedienbar ist.

12. Empfangsvorrichtung nach Anspruch 11, dadurch gekennzeichnet, daß ein Bedienelement zum Ein- und Ausschalten der Informationsdarstellung dient.

13. Empfangsvorrichtung nach Anspruch 12, dadurch gekennzeichnet, daß die Empfangsvorrichtung die Ortungsvorrichtung (1) entweder mit einem GPS-Empfänger, einem Navigationssystem oder einer Einrichtung vornimmt, die den Ort der Empfangsvorrichtung mittels TII-Signalen ermittelt.
